# EUROPÄISCHE PATENTSCHRIFT

(11) **EP 2 742 668 B1**
(45) Veröffentlichungstag und Bekanntmachung des Hinweises auf die Patenterteilung: **01.07.2015**
(21) Anmeldenummer: 12743687.1
(22) Anmeldetag: 04.08.2012
(51) Int. Cl.: H04L 29/08

(54) **VERFAHREN ZUM BEREITSTELLEN EINER ANZEIGE IN EINEM FAHRZEUG SOWIE FAHRZEUG MIT EINER ANZEIGEEINRICHTUNG**
METHOD PROVIDING A DISPLAY IN A MOTOR VEHICLE AND MOTOR VEHICLE COMPRISING A DISPLAY UNIT
PROCÉDÉ DE MISE À DISPOSITION D'UN AFFICHAGE DANS UN VÉHICULE AINSI QUE VÉHICULE ÉQUIPÉ D'UN DISPOSITIF D'AFFICHAGE

(30) Priorität: 10.08.2011 DE 102011109931
(43) Veröffentlichungstag der Anmeldung: 18.06.2014
(73) Patentinhaber: Audi AG, 85045 Ingolstadt (DE)
(72) Erfinder: WISCHHOF, Lars, 85051 Ingolstadt (DE); BEZOLD, Matthias, Dr., 91080 Spardorf (DE)
(74) Vertreter: Brandt, Kai
(86) Internationale Anmeldenummer: PCT/EP2012/003342
(87) Internationale Veröffentlichungsnummer: WO 2013/020692

(56) Entgegenhaltungen:
- DE-A1-102005 000 653
- US-A1- 2009 247 132

## Beschreibung

Die Erfindung betrifft ein Verfahren zum Bereitstellen einer Anzeige in einem Fahrzeug sowie ein Fahrzeug mit einer Anzeigeeinrichtung, in dem das erfindungsgemäße Verfahren durchführbar ist.

Die Vielfalt an möglichen, in einem Fahrzeug umsetzbaren Funktionen, die mit dem Bereitstellen einer Anzeige einhergehen, steigt beständig. Zum einen bedingt dies, dass bereits sehr viele Funktionen standardmäßig in einem Fahrzeug zur Verfügung gestellt werden. Zum anderen führt dies aber auch dazu, dass der Wunsch besteht, das Fahrzeug regelmäßig nachzurüsten.

Es ist von Mobilfunktelefonen her bekannt, dass bestimmte Funktionen durch so genannte Applikationen ("Apps") erfüllt werden können, die auf ein Mobilfunktelefon heruntergeladen werden können. Solche Applikationen sind typischerweise für einen bestimmten Typus von Mobilfunktelefon maßgeschneidert und auf diesem ablauffähig. Dies betrifft auch die Ansteuerung einer Anzeigeeinrichtung, beispielsweise des Touchscreens.

In einem Fahrzeug wird die Anzeigeeinrichtung von einer Steuereinrichtung angesteuert, die zu den auf dem Fahrzeug standardmäßig bereitgestellten Funktionalitäten passt. Sie passt aber nicht unbedingt zu neuen, später definierten Funktionen. So behilft man sich bisher damit, einen (Internet-) Browser einzusetzen, um Darstellungen bzw. Anzeigen bereitzustellen. Die Darstellung im Browser weicht im Regelfall jedoch stark von der sonst im System verwendeten Darstellung ab, sodass sich ästhetische Einschränkungen ergeben; es wäre wünschenswert, könnte man eine einheitliche Darstellung bereitstellen. Alternativ zur Verwendung des Browsers gibt es die Fernbedienung von im Fahrzeugsystem bereits vorhandenen Darstellungselementen. Man bezeichnet diese auch als "Remote HMI". Bei diesem Ansatz ist man im Gegensatz zum Browser auf bereits im System vorhandene Darstellungselemente (so genannte "Widgets") beschränkt. Es ist keine freie Definition grafischer Darstellungselemente möglich. Natürlich kann man auch neue Software installieren und diese durch das Fahrzeugsystem ausführen lassen. Hier besteht jedoch der Nachteil, dass das vorher vorhandene Standardsystem nur schwer von Nebeneffekten freizuhalten ist: Beispielsweise kann die nachgeladene Funktion das Restsystem durch Fehlfunktionen wie das Zeichnen in nicht dafür vorgesehene Bereiche oder das unbegrenzte Anfordern von Speicher oder von Leistung des Prozessors beeinträchtigen.

Die DE 10 2005 000 653 A1 beschreibt ein Verfahren und ein System zur Installation von Funktionen eines elektronischen Geräts realisierender Software. Dabei werden installationsrelevante Daten über eine unidirektionale globale Aussendung von dem Gerät empfangen. Bei den installationsrelevanten Daten ist auch ein Steuerskript vorgesehen, welches die Installation überwacht und eigenständig steuert, wie beispielsweise die Installation der Daten in einer bestimmten Reihenfolge.

Die US 2009/024732 A1 beschreibt ein Verfahren zur Kommunikation zwischen einem Fahrzeug und einem Callcenter. Dabei können Daten in Form einer MMS-Nachricht vom Fahrzeug empfangen werden, welche unterschiedliche Teile aufweisen kann, wie beispielsweise Bild-, Audio-, Videodateien oder textbasierte ausführbare Skripte.

Die Aufgabe der vorliegenden Erfindung besteht darin, einen Weg aufzuzeigen, wie in einem Fahrzeug neue Funktionen definiert werden können, die mit dem Bereitstellen neuer grafischer Gestaltungselemente einhergehen.

Die Aufgabe wird in einem Aspekt durch ein Verfahren mit den Merkmalen gemäß Patentanspruch 1 und in einem anderen Aspekt durch ein Fahrzeug mit den Merkmalen gemäß Patentanspruch 9 gelöst.

Das erfindungsgemäße Verfahren umfasst somit das Empfangen eines Skripts von einer von dem Fahrzeug verschiedenen Einrichtung durch das Fahrzeug, wobei das Skript zumindest einen Befehl zum grafischen Gestalten einer Anzeige und einen Befehl zum Auslesen eines Datenwerts aus einem Speicher des Fahrzeugs beinhaltet. Sodann wird das Skript durch einen Interpreter ausgeführt, sodass der Datenwert aus dem Speicher ausgelesen wird und eine Anzeige bereitgestellt wird, deren grafische Gestaltung durch das Skript vorgegeben ist, und die eine durch den Datenwert bestimmte Teildarstellung beinhaltet.

Bei dem erfindungsgemäßen Verfahren wird somit eine Skriptsprache verwendet, um neue Funktionalitäten und Darstellungsformen zu definieren. Zu solchen Funktionalitäten gehört eben auch das Auslesen eines Datenwerts aus einem Speicher des Fahrzeugs. Mit diesem Datenwert wird dann gearbeitet, und das Ergebnis bestimmt zumindest eine Teildarstellung der Anzeige. Durch das erfindungsgemäße Verfahren lassen sich somit ganz neuartige Arten von Anzeigen und Bedienschritten definieren, entweder unter Einbeziehung von solchen Datenwerten, die im Standardsystem des Fahrzeugs nicht in einer Anzeige integriert werden, oder eben auch insbesondere durch das Bereitstellen solcher grafischen Elemente, die durch das Standardsystem nicht bereitgestellt werden. Die Skriptsprache ist insbesondere besonders gut geeignet, neue grafische Elemente zu definieren, die bisher nicht definiert waren. Eine Skriptsprache erlaubt bekanntlich der nachgeladenen Funktion elementare Zeichenfunktionen (wie Punkt, Linie, Polygon, dreidimensionale Darstellungen etc.), und durch die Interpretation durch den Interpreter im Fahrzeug kann das Risiko von Fehlfunktionen des Gesamtsystems begrenzt werden. Dies gilt insbesondere dann, wenn die Skriptsprache eine solche ist, die einen stark eingeschränkten Sprachumfang hat, denn sie wird durch den Interpreter vom Restsystem abgeschirmt. Die nachgeladene Funktion kann über den Funktionsumfang einer reinen Fernsteuerung von Anzeigeelementen hinaus frei definierte komplexe Formen in den vorgegebenen Bereich zeichnen.

Bei einer bevorzugten Ausführungsform der Erfindung wird eingangs eine Mobilfunkverbindung des Fahrzeugs mit einer Datenverarbeitungseinrichtung außerhalb des Fahrzeugs aufgebaut, und das Skript wird von der Datenverarbeitungseinrichtung durch das Fahrzeug empfangen. Es ist auf diese Weise möglich, über Mobilfunk die neue Funktionalität in dem Fahrzeug bereitzustellen.

Bei einer Alternative zu der genannten bevorzugten Ausführungsform wird zunächst eine von einer Mobilfunkverbindung verschiedene Kommunikationsverbindung mit einem Mobilfunkgerät aufgebaut, und das Skript wird von dem Mobilfunkgerät durch das Fahrzeug empfangen. Hier kann von an sich bekannten Schnittstellen zwischen Mobilfunkgeräten und Fahrzeug (zum Beispiel Bluetooth® oder WLAN etc.) Gebrauch gemacht werden, um dem Fahrzeug eine neue Funktionalität zu übermitteln. Das Mobilfunkgerät kann beispielsweise seinerseits über eine Mobilfunkverbindung, insbesondere über eine Internetverbindung, das Skript oder ein das Skript erzeugendes App empfangen haben.

Bei einer bevorzugten Ausführungsform der beiden Alternativen wird durch das Fahrzeug eine Anfrage an die Einrichtung (also die Datenverarbeitungseinrichtung bzw. das Mobilfunkgerät) ausgesendet, damit diese das Skript nach dem Aufbauen der Verbindung (also der Mobilfunkverbindung bzw. der von einer Mobilfunkverbindung verschiedenen Verbindung) bereitstellt. Insbesondere kann die Anfrage bei einem Start des Fahrzeugs oder einer Funktionseinheit desselben automatisch ausgesendet werden. Auf diese Weise kann das Fahrzeug in regelmäßigen Abständen durch Empfangen jeweils aktueller Skripts die Funktionalitäten aktuell halten.

Bei einer bevorzugten Ausführungsform des erfindungsgemäßen Verfahrens wird die Anzeige auf einem Teilbereich einer Anzeigeeinrichtung des Fahrzeugs bereitgestellt, und ein weiterer Teilbereich der Anzeigeeinrichtung dient zum Bereitstellen einer weiteren Anzeige von einem auf dem Fahrzeugfest installierten Computerprogramm. Bei dieser bevorzugten Ausführungsform wird der eine Teilbereich für die anhand des Skripts erzeugte grafische Darstellung reserviert, es ist aber gewährleistet, dass der weitere Teilbereich ungestört arbeitet, sodass es nicht Beeinträchtigungen und Fehlfunktionen im Ablauf der Software (des fest installierten Computerprogramms) gibt.

Die grafische Gestaltung beinhaltet bevorzugt geometrische Formen, durch die eine 3D-Darstellung bereitgestellt wird. Insbesondere die durch das Skript gegebene mögliche Vielfalt an Darstellungsarten ist geeignet, auch eine 3D-Darstellung in besonders ansprechender Weise bereitzustellen.

Das erfindungsgemäße Fahrzeug umfasst eine Anzeigeeinrichtung, eine Datenschnittstelle zum Empfangen eines Skripts und einen Interpreter zum Ansteuern zumindest eines Teilbereichs der Anzeigeeinrichtung anhand eines empfangenen Skripts, und der Interpreter ist dazu ausgelegt, auf von der Datenerfassungseinrichtung erfasste Daten zuzugreifen. Typischerweise wird die Datenerfassungseinrichtung einen Speicher umfassen, auf den dann zugegriffen wird.

Das erfindungsgemäße Fahrzeug stellt die Möglichkeit bereit, das erfindungsgemäße Verfahren durchzuführen, sodass die zum erfindungsgemäßen Verfahren angeführten Vorteile gleichermaßen auch für das erfindungsgemäße Fahrzeug gelten.

Nachfolgend wird eine bevorzugte Ausführungsform der Erfindung unter Bezug auf die Zeichnung näher beschrieben, in der
- Fig. 1: die wesentlichen Softwarekomponenten eines erfindungsgemäßen Fahrzeugs und deren Wechselwirkung mit einer externen Datenverarbeitungseinrichtung veranschaulicht sowie
- Fig. 2: die wesentlichen Softwarekomponenten eines erfindungsgemäßen Fahrzeugs und deren Wechselwirkung mit einem Mobilfunkgerät veranschaulicht.

Ein Kraftfahrzeug 100 weist ein so genanntes Infotainmentsystem 10 auf, also eine Einrichtung zum Verarbeiten von Informationen und Datenwerten für die Unterhaltung und Navigation. Die in den Figuren gestrichelt gezeigten Elemente werden vorliegend als Softwarebausteine interpretiert, könnten jedoch alternativ genauso auch in Form von Hardware vorliegen.

Eine Einrichtung 12 erfasst von Speichermedien wie beispielsweise einer CD Daten. Eine Einrichtung 14 dient der Bereitstellung der Funktionalität eines Navigationssystems und kann entsprechende Kartendaten sowie Standortdaten erfassen. Eine Einrichtung 16 dient zum Bereitstellen einer Freisprechanlage für ein Mobilfunktelefon in dem Fahrzeug 100. Über eine Schnittstelle 18 kann auf die Einrichtungen 12, 14 und 16 zugegriffen werden. In diesem Zusammenhang können die Einrichtungen 12, 14, 16 auch als einen Speicher umfassend interpretiert werden, der entsprechende Datenwerte beinhaltet. Das Kraftfahrzeug weist ferner eine externe Datenaustauschschnittstelle 20 auf, die mit einer außerhalb des Kraftfahrzeugs befindlichen Datenverarbeitungseinrichtung 200 kommunizieren kann, beispielsweise über GPRS, UMTS, LTE etc.

Von der externen Datenverarbeitungseinrichtung 200 kann insbesondere ein Skript empfangen werden, das Befehle umfasst, aus den Einrichtungen 12, 14 und 16 einen Datenwert auszulesen und bestimmte Anzeigen bereitzustellen. Das Skript ist durch einen Interpreter 22 interpretierbar, wird also unmittelbar in Steuerbefehle umgewandelt. Diese Steuerbefehle werden an einer flexiblen Mensch-Maschine-Schnittstelle 24 bereitgestellt. Das Übermitteln des Skripts kann neben dem Befehl zum Auslesen eines Datenwerts aus den Einrichtungen 12, 14 oder 16 auch noch grafische Elemente definieren.

Beispielsweise kann von der externen Datenverarbeitungseinrichtung ein Skript angefordert werden, mithilfe dessen der durchschnittliche Verbrauch des Kraftfahrzeugs 100 an Betriebsmittel (Kraftstoff) anzeigbar ist. Das Skript wird von der externen Datenverarbeitungseinrichtung 200 durch das Kraftfahrzeug 100 angefordert und von der Datenverarbeitungseinrichtung 200 an das Kraftfahrzeug 100 übermittelt, wozu die Schnittstelle 20 dient. Der Interpreter 22 interpretiert das Skript und liest über die Fahrzeugschnittstelle 18 den Datenwert betreffend den Durchschnittsverbrauch aus der Einrichtung 14 aus. Dieser Datenwert kann beispielsweise in alphanumerischer Form in eine grafische Darstellung integriert werden, wobei die Elemente der grafischen Darstellung ebenfalls durch das Skript festgelegt sind. Beispielsweise kann die Höhe eines Balkens neben der alphanumerischen Darstellung den mittleren Verbrauch an Kraftstoff anzeigen.

Für die Darstellung kann auf einer Anzeigeeinrichtung ein bestimmter Bereich bereitgestellt sein, der nicht durch die in der Figur nicht gezeigten herkömmlichen Einrichtungen zum Bereitstellen einer Anzeige angesteuert wird. Genauso gut ist es aber auch möglich, gewissermaßen in einer höheren Ebene eine Anzeige bereitzustellen, indem beispielsweise eine Karte, die durch das Navigationssystem bereitgestellt wird, ein Symbol überlagert wird, und zwar an einer bestimmten Stelle der Karte. Die Darstellung des Symbols ist dann durch das Skript festgelegt, wohingegen die Karte in herkömmlicher Weise bereitgestellt wird.

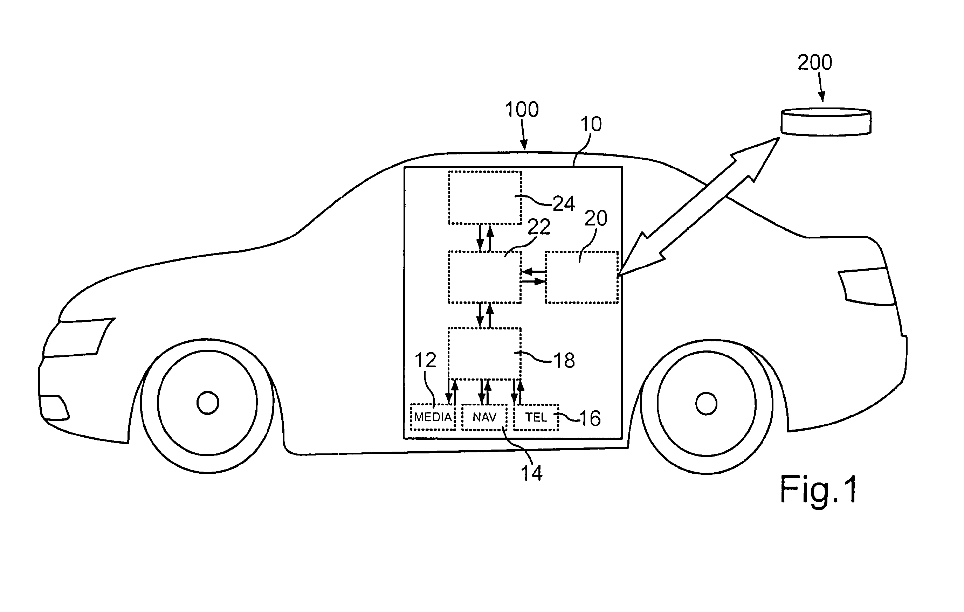

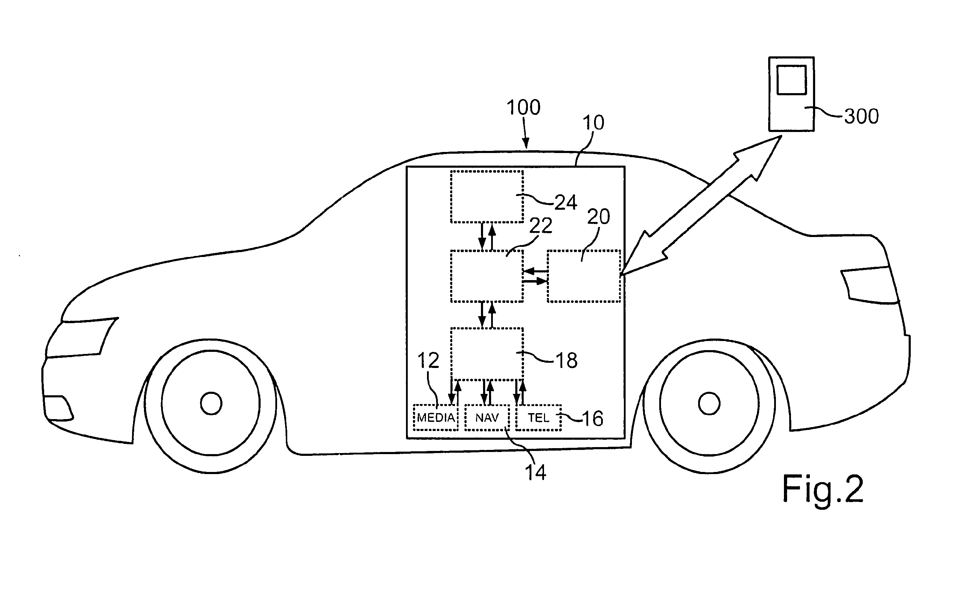

Alternativ zum Anfordern des Skripts von einer externen Datenverarbeitungseinrichtung 200 über ein Mobilfunknetz kann auch eine Schnittstelle zur Koppelung eines Mobilfunktelefons 300 (Fig. 2) mit dem Kraftfahrzeug 100 genutzt werden; solche Schnittstellen arbeiten beispielsweise mit WLAN, USB, Bluetooth® etc. Das Skript kann von dem Mobilfunktelefon 300 angefordert werden und genauso in Befehle umgesetzt werden, wie es oben anhand von Fig. 1 erläutert wurde.

## Patentansprüche

1. Verfahren zum Bereitstellen einer Anzeige in einem Fahrzeug, mit dem Schritt:
- Empfangen eines Skripts von einer von dem Fahrzeug verschiedenen Einrichtung (200, 300) durch das Fahrzeug (100), wobei das Skript einen Befehl zum Auslesen eines Datenwertes aus einem Speicher (12, 14, 16) des Fahrzeugs (100) beinhaltet,
**dadurch gekennzeichnet, dass**
das Skript zumindest einen Befehl zum grafischen Gestalten einer Anzeige beinhaltet, und
mit dem weiteren kennzeichnenden Schritt:
- Ausführen des Skripts durch einen Interpreter (22), sodass der Datenwert aus dem Speicher (12, 14, 16) ausgelesen wird und eine Anzeige bereitgestellt wird, deren grafische Gestaltung durch das Skript vorgegeben ist, und die eine durch den Datenwert bestimmte Teildarstellung beinhaltet, wobei das Skript für eine nachgeladene Funktion elementare Zeichenfunktionen bereitstellt und wobei die Anzeige auf einem Teilbereich der Anzeigeeinrichtung (24) des Fahrzeugs bereitgestellt wird und auf einem weiteren Teilbereich der Anzeigeeinrichtung (24) eine weitere Anzeige von einem auf dem Fahrzeug fest installierten Computerprogramm bereitgestellt wird.

2. Verfahren nach Anspruch 1,
**gekennzeichnet durch**
Aufbauen einer Mobilfunkverbindung des Fahrzeugs (100) mit einer Datenverarbeitungseinrichtung (200) außerhalb des Fahrzeugs (100) und **durch** Empfangen des Skripts von der Datenverarbeitungseinrichtung (200) **durch** das Fahrzeug (100).

3. Verfahren nach Anspruch 1,
**gekennzeichnet durch**
Aufbauen einer von einer Mobilfunkverbindung verschiedenen Kommunikationsverbindung mit einem Mobilfunkgerät (300) und **durch** Empfangen des Skripts von dem Mobilfunkgerät (300) **durch** das Fahrzeug (100).

4. Verfahren nach Anspruch 2 oder 3,
**gekennzeichnet durch**
Senden einer Anfrage **durch** das Fahrzeug (100) an die Einrichtung (200, 300) nach Bereitstellen des Skripts nach dem Aufbauen der Verbindung.

5. Verfahren nach Anspruch 4,
**dadurch gekennzeichnet, dass**
die Anfragen bei einem Start des Fahrzeugs oder einer Funktionseinheit desselben gesendet wird.

6. Verfahren nach einem der vorhergehenden Ansprüche,
**dadurch gekennzeichnet, dass**
die durch den Datenwert bestimmte Teildarstellungen den Datenwert selbst in alphanumerischer Form angibt.

7. Verfahren nach einem der vorhergehenden Ansprüche,
**dadurch gekennzeichnet, dass**
die grafische Gestaltung geometrische Formen umfasst, durch die eine 3D-Darstellung bereitgestellt wird.

8. Fahrzeug mit einer Anzeigeeinrichtung (24), zumindest einer Datenerfassungseinrichtung (12, 14, 16), mit einer Datenschnittstelle (20) zum Empfangen eines Skripts,
**dadurch gekennzeichnet, dass**
das das Fahrzeug einen Interpreter (22) zum Ansteuern zumindest eines Teilbereichs der Anzeigeeinrichtung (24) anhand eines empfangenen Skripts umfasst, wobei der Interpreter (22) dazu ausgelegt ist, auf von der Datenverarbeitungseinrichtung (12, 14, 16) erfasste Daten zuzugreifen, und wobei der Interpreter weiterhin dazu ausgelegt ist, das Skript derart auszuführen, dass ein Datenwert aus dem Speicher (12, 14, 16) ausgelesen wird und eine Anzeige auf der Anzeigeeinrichtung bereitgestellt wird, deren grafische Gestaltung durch das Skript vorgegeben ist, und die eine durch den Datenwert bestimmte Teildarstellung beinhaltet, wobei mittels des Skripts für eine nachgeladene Funktion elementare Zeichenfunktionen bereitstellbar sind und wobei der Interpreter dazu ausgelegt ist, das Skript derart auszuführen, dass die Anzeige auf einem Teilbereich der Anzeigeeinrichtung (24) des Fahrzeugs bereitgestellt wird und auf einem weiteren Teilbereich der Anzeigeeinrichtung (24) eine weitere Anzeige von einem auf dem Fahrzeug fest installierten Computerprogramm bereitgestellt wird.

## Claims

1. Method for providing a display in a vehicle, comprising the step of:
- receiving a script from a device (200, 300), which is separate from the vehicle, by means of the vehicle (100), the script containing a command to read out a data value from a memory (12, 14, 16) of the vehicle (100),
**characterised in that**
the script contains at least one command to graphically illustrate a display, and comprising the additional characterising step of:
- executing the script by means of an interpreter (22) so that the data value is read out from the memory (12, 14, 16) and a display is provided, the graphic illustration of which is predetermined by the script, and which display contains a partial depiction determined by the data value, the script providing basic graphic functions for a reloaded function and the display being provided on a portion of the display device (24) of the vehicle and an additional display being provided on an additional portion of the display device (24) by a computer program permanently installed in the vehicle.

2. Method according to claim 1,
**characterised by**
setting up a mobile radio connection between the vehicle (100) and a data processing device (200) outside of the vehicle (100) and by receiving the script from the data processing device (200) by means of the vehicle (100).

3. Method according to claim 1,
**characterised by**
setting up a communication connection which is separate from a mobile connection and comprises a mobile radio unit (300), and by receiving the script from the mobile radio unit (300) by means of the vehicle (100).

4. Method according to either claim 2 or claim 3,
**characterised by**
sending a request to the device (200, 300) by means of the vehicle (100) after providing the script once the connection has been set up.

5. Method according to claim 4,
**characterised in that**
the request is sent when the vehicle or a functional unit of the vehicle is started.

6. Method according to any of the preceding claims,
**characterised in that**
the partial depiction determined by the data value provides the data value itself in alphanumeric form.

7. Method according to any of the preceding claims,
**characterised in that**
the graphic illustration comprises geometric shapes which provide a 3D depiction.

8. Vehicle comprising a display device (24), at least one data collecting device (12, 14, 16) comprising a data interface (20) for receiving a script,
**characterised in that**
the vehicle comprises an interpreter (22) for controlling at least a portion of the display device (24) on the basis of a received script, the interpreter (22) being designed to access data collected by the data processing device (12, 14, 16), and the interpreter also being designed to execute the script such that a data value is read out from the memory (12, 14, 16) and a display is provided on the display device, the graphic illustration of which is predetermined by the script, and which display contains a partial depiction determined by the data value, it being possible to provide basic graphic functions for a reloaded function by means of the script and the interpreter being designed to execute the script such that the display is provided on a portion of the display device (24) of the vehicle and an additional display is provided on an additional portion of the display device (24) by a computer program permanently installed in the vehicle.

## Revendications

1. Procédé de mise à disposition d'un affichage dans un véhicule, comprenant l'étape consistant à :
- recevoir dans le véhicule (100) un script d'un dispositif (200, 300) différent du véhicule, dans lequel le script contient une instruction pour lire une valeur de données dans une mémoire (12, 14, 16) du véhicule (100),
**caractérisé en ce que** :
le script contient au moins une instruction pour la configuration graphique d'un affichage et
ayant l'autre étape caractérisante visant à :
- exécuter le script par un interpréteur (22) de sorte que la valeur de données soit lue dans la mémoire (2, 14, 16) et que soit mis à disposition un affichage dont la configuration graphique est prédéfinie par le script et qui contient une représentation partielle déterminée par la valeur de données, dans lequel le script met à disposition pour une fonction rechargée des fonctions de caractères élémentaires et dans lequel l'affichage est mis à disposition dans une zone partielle du dispositif d'affichage (24) du véhicule et met à disposition dans une autre zone partielle du dispositif d'affichage (24) un autre affichage d'un programme informatique installé fixe sur le véhicule.

2. Procédé selon la revendication 1,
**caractérisé par** :
l'instauration d'une connexion radiotéléphonique mobile du véhicule (100) avec un dispositif de traitement de données (200) en dehors du véhicule (100) et la réception du script du dispositif de traitement de données (200) par le véhicule (100).

3. Procédé selon la revendication 1,
**caractérisé par** :
l'instauration d'une connexion de communication différente de la connexion radiotéléphonique mobile avec un appareil radiotéléphonique mobile (300) et la réception du script de l'appareil radiotéléphonique mobile (300) par le véhicule (100).

4. Procédé selon la revendication 2 ou la revendication 3,
**caractérisé par** :
l'envoi d'une demande par le véhicule (100) au dispositif (200, 300) après la mise à disposition du script une fois la connexion instaurée.

5. Procédé selon la revendication 4,
**caractérisé en ce que** :
la demande est envoyée lors d'un démarrage du véhicule ou d'une unité fonctionnelle de celui-ci.

6. Procédé selon l'une quelconque des revendications précédentes,
**caractérisé en ce que** :
les représentations partielles déterminées par la valeur de données indiquent la valeur de données même sous forme alphanumérique.

7. Procédé selon l'une quelconque des revendications précédentes,
**caractérisé en ce que** :
la configuration graphique comprend des formes géométriques par lesquelles une représentation tridimensionnelle est mise à disposition.

8. Véhicule comprenant un dispositif d'affichage (24), au moins un dispositif d'acquisition de données (12, 14, 16), avec une interface de données (20) pour recevoir un script,
**caractérisé en ce que** :
le véhicule comprend un interpréteur (22) pour commander au moins une zone partielle du dispositif d'affichage (24) sur la base d'un script reçu, dans lequel l'interpréteur (22) est dimensionné de manière à accéder aux données acquises par le dispositif de traitement de données (12, 14, 16) et dans lequel l'interpréteur est en outre dimensionné pour exécuter le script de sorte qu'une valeur de données soit lue dans la mémoire (12, 14, 16) et qu'un affichage soit mis à disposition sur le dispositif d'affichage, dont la configuration graphique est donnée par le script et qui contient, une représentation partielle déterminée par la valeur de données, dans lequel on peut disposer de fonctions de caractères élémentaires au moyen du script pour une fonction rechargée et dans lequel l'interpréteur est dimensionné de manière à exécuter le script afin que l'affichage soit mis à disposition sur une zone partielle du dispositif d'affichage (24) du véhicule et qu'un autre affichage soit mis à disposition sur une autre zone partielle du dispositif d'affichage (24) par un programme informatique installés fixe sur le véhicule.
